# EUROPEAN PATENT APPLICATION

(11) **EP 4 752 725 A1**
(43) Date of publication of application: **03.06.2026**
(21) Application number: 25221782.3
(22) Date of filing: 09.12.2025
(51) Int. Cl.: G06F 9/50, G06F 9/455

(54) **METHOD AND APPARATUS FOR CONTROLLING QUALITY OF SERVICE OF VIRTUAL MACHINE, DEVICE AND STORAGE MEDIUM**

(30) Priority: 17.12.2024 CN 202411864197
(71) Applicant: Beijing Baidu Netcom Science Technology Co., Ltd., Beijing 100085 (CN)
(72) Inventor: SONG, Zhan, Beijing, 100085 (CN); YING, Ru, Beijing, 100085 (CN); MENG, Xianjun, Beijing, 100085 (CN); ZHENG, Ran, Beijing, 100085 (CN); WANG, Bo, Beijing, 100085 (CN); SONG, Yang, Beijing, 100085 (CN); LI, Xuehui, Beijing, 100085 (CN)
(74) Representative: Hannke Bittner & Partner mbB Regensburg

(57) **Abstract**

Provided is a method and an apparatus for controlling quality of service of a virtual machine, relating to the fields of cloud computing, virtualization, and big data. The method includes: storing (S101) an operation request in a target queue corresponding to a layer of a virtual machine cluster when an available token quantity in a token bucket of the layer is unable to meet a target token quantity required for the operation request; wherein tokens of the layer are periodically generated according to an upper limit of quality of service of the layer; deducting (S102) the target token quantity from an updated available token quantity when the available token quantity in the token bucket is updated to meet the target token quantity required for the operation request; and sending (S103) the operation request from the target queue to the layer for processing when deducting the target token quantity successfully.

## Description

### TECHNICAL FIELD

The present disclosure relates to the field of computer technology, and in particular to the fields of cloud computing, virtualization, big data and other technologies.

### BACKGROUND

Currently, cloud computing has become a solution widely adopted in the industry, and provides powerful computing and storage capabilities for enterprises and individuals. The open-source cloud computing platform abstracts computing, network and storage resources into a resource pool through virtualization technology, thereby providing users with elastic, scalable and stable cloud infrastructure solutions.

Here, the device-level QoS (Quality of Service) is a commonly-used resource management strategy in the cloud platform system, and the core of this strategy lies in the allocation and management of physical device resources (disks) to ensure the quality of service of different users and applications.

### SUMMARY

The present disclosure provides a method and an apparatus for controlling quality of service of a virtual machine, a device and a storage medium.

According to one aspect of the present disclosure, provided is a method for controlling quality of service of a virtual machine, including:
storing an operation request in a target queue corresponding to a target layer of a virtual machine cluster when an available token quantity in a target token bucket of the target layer is unable to meet a target token quantity required for the operation request; where tokens of the target layer are periodically generated according to an upper limit of quality of service of the target layer;
deducting the target token quantity from an updated available token quantity when the available token quantity in the target token bucket is updated to meet the target token quantity required for the operation request; and
sending the operation request from the target queue to the target layer for processing when deducting the target token quantity successfully.

According to another aspect of the present disclosure, provided is an apparatus for controlling quality of service of a virtual machine, including:
a first processing module configured to store an operation request in a target queue corresponding to a target layer of a virtual machine cluster when an available token quantity in a target token bucket of the target layer is unable to meet a target token quantity required for the operation request; where tokens of the target layer are periodically generated according to an upper limit of quality of service of the target layer;
a second processing module configured to deduct the target token quantity from an updated available token quantity when the available token quantity in the target token bucket is updated to meet the target token quantity required for the operation request; and
a sending module configured to send the operation request from the target queue to the target layer for processing when deducting the target token quantity successfully.

According to yet another aspect of the present disclosure, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

According to yet another aspect of the present disclosure, provided is a non-transitory computer-readable storage medium storing a computer instruction thereon, and the computer instruction is used to cause a computer to execute the method according to any one of the embodiments of the present disclosure.

According to yet another aspect of the present disclosure, provided is a computer program product including a computer program, and the computer program implements the method according to any one of the embodiments of the present disclosure, when executed by a processor.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure.
FIG. 1 is a schematic flow chart of a method for controlling quality of service of a virtual machine according to an embodiment of the present disclosure;
FIG. 2 is an architecture diagram of the virtual machine according to an embodiment of the present disclosure;
FIG. 3 is a schematic diagram of controlling quality of service according to an embodiment of the present disclosure;
FIG. 4 is a schematic flow chart of generating a token of a target layer according to an embodiment of the present disclosure;
FIG. 5 is a schematic diagram of the overall flow of the method for controlling the quality of service of the virtual machine according to an embodiment of the present disclosure;
FIG. 6 is a structural schematic diagram of an apparatus for controlling quality of service of a virtual machine according to an embodiment of the present disclosure; and
FIG. 7 is a block diagram of an electronic device for implementing the method for controlling the quality of service of the virtual machine in the embodiments of the present disclosure.

### DETAILED DESCRIPTION

Hereinafter, descriptions to exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

The terms "first", "second" and the like in the present disclosure are used to distinguish the similar objects, but not necessarily to describe a particular order or sequence. In addition, the terms "include" and "have" and any variations thereof are intended to cover a non-exclusive inclusion. For example, a method, system, product or device containing a series of steps or units is not necessarily limited to those steps or units listed clearly, but may include other steps or units that are not listed clearly or that are inherent to the process, method, product or device.

In a scenario where a plurality of user virtual machines are running on a large-scale cloud platform system, the plurality of virtual machines may send a large number of operation requests at the same time, and these operation requests require the resources of the cloud platform to process. Therefore, it is necessary to control the quality of service of the virtual machines to ensure efficiency, stability and user satisfaction in the cloud computing environment.

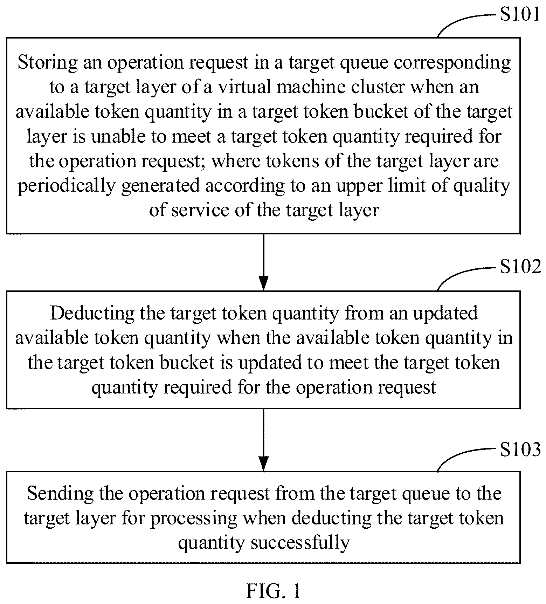

An embodiment of the present disclosure provides a method for controlling quality of service of a virtual machine. FIG. 1 shows a schematic flow chart of the method, including the following content:

S101: storing an operation request in a target queue corresponding to a target layer of a virtual machine cluster when an available token quantity in a target token bucket of the target layer is unable to meet a target token quantity required for the operation request; where tokens of the target layer are periodically generated according to an upper limit of quality of service of the target layer.

Here, the virtual machine cluster may be divided into different levels according to requirements, and each level may be used as the target layer. For example, if it is desired to implement the control of the quality of service of the entire virtual machine cluster, the entire virtual machine cluster may be used as the target layer. If it is desired to control the quality of service of some of the virtual machines, these virtual machines may be used as the target layer.

During implementation, the quality of service is controlled independently in different levels, and the controlled target layer may be flexibly defined to achieve flexible management and control of the quality of service in different levels.

In the embodiment of the present disclosure, the target layer uses a token bucket mechanism to control the quality of service. The corresponding upper limit of quality of service may be set for the target layer. When the upper limit is exceeded, the available tokens in the target token bucket of the target layer will be in short supply, and new operation requests will be suspended and placed in the target queue for waiting because there are not enough available tokens.

It can be understood that the purpose of periodically generating the tokens of the target layer is to rhythmically generate new tokens for consumption by subsequent operation requests according to the upper limit of quality of service of the target layer. The tokens, as limited consumed resources, can achieve the purpose of controlling the quality of service of the target layer.

S102: deducting the target token quantity from an updated available token quantity when the available token quantity in the target token bucket is updated to meet the target token quantity required for the operation request.

S103: sending the operation request from the target queue to the target layer for processing when deducting the target token quantity successfully.

For example, if the available token quantity of the target layer is A, the target token quantity required for the operation request is B and A is less than B, then it means that the available token quantity of the target layer of the virtual machine cluster cannot meet the target token quantity required for the operation request. It is necessary to wait for the update of the available token quantity of the target layer until the target token quantity required for the operation request is met, and then deduct the target token quantity from the updated available token quantity. When the target token quantity is successfully deducted, the operation request is sent from the target queue to the target layer for processing.

In the embodiment of the present disclosure, the generation rate of tokens is controlled based on the quality of service of the target layer, so that the available token quantity of the target layer is controlled within the upper limit range of the quality of service while the transmission efficiency of the operation request is improved as much as possible. In addition, the target queue may store the operation request exceeding the upper limit of the quality of service of the target layer, so that the operation request is as complete as possible without losing tasks. When there are enough available tokens, the operation request will be resent to the corresponding target layer for processing, which can not only process the operation request in time but also avoid network congestion affecting the performance of the cloud platform. Based on the method proposed in the embodiment of the present disclosure, the quality of service of the virtual machine can be controlled, and the resources of the virtual machine platform can be reasonably utilized. Moreover, the flexible control of the quality of service can be achieved based on different definitions of the target layer, improving the convenience of control of the quality of service.

Accordingly, in some embodiments, when the available token quantity of the target layer meets the target token quantity required for the operation request and when the target token quantity is successfully deducted from the available token quantity, the operation request is sent to the target layer for processing.

During implementation, if the available token quantity of the target layer is A, the target token quantity required for the operation request is C and A is greater than C, then it means that the available token quantity of the target layer of the virtual machine cluster meets the target token quantity required for the operation request. In this case, the target token quantity may be directly deducted from the available token quantity, and the operation request may be sent to the target layer for processing.

In the embodiments of the present disclosure, combined with the token bucket mechanism, the operation request can be directly sent to the target layer for execution when there are enough available tokens, so as to improve the overall quality of service.

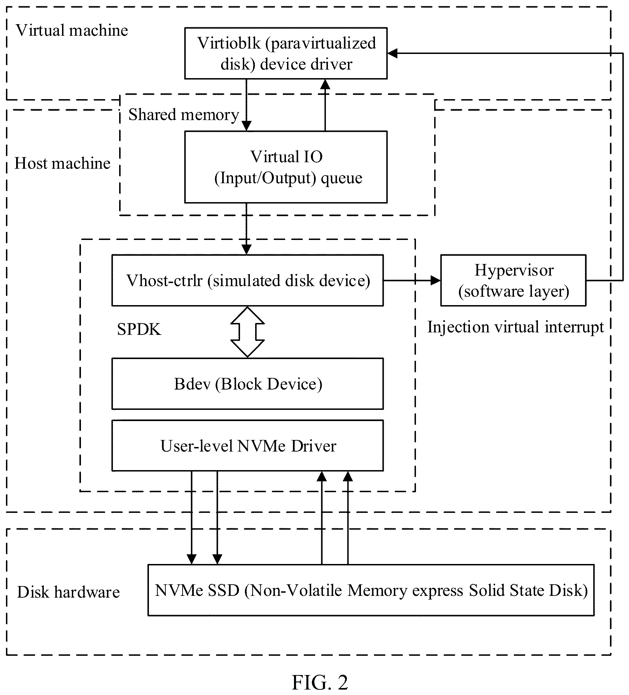

In the related art, the use of SPDK (Storage Performance Development Kit) is a mainstream virtualized IO (Input/Output) acceleration scheme. The overall architecture of the SPDK is shown in FIG. 2: the Qemu-KVM (Qemu-Kernel Virtual Machine) creates a Vhost-ctrlr (simulated disk device) on the virtual machine side, and injects a virtioblk (paravirtualized disk)-type device into the virtual machine based on the Hypervisor (software layer), and the virtioblk driver implements the front end of the virtual IO queue. The SPDK acts as a proxy layer between the virtual machine and the NVMe SSD (Non-Volatile Memory express Solid State Disk) disk hardware, builds a connection between the back end of the virtual IO queue and the front end of the virtual IO queue on the upstream virtual machine side, and provides a User-level NVMe Driver to manage the downstream physical disk. In a specific implementation, the SPDK processes requests on the IO queue and responses of the Nvme disk in a polling manner, reducing the loss of asynchronous event notification and interrupt injection. The Bdev (Block Device) acts as a general block in the SPDK to store abstraction layers, shields the implementation details of the underlying storage device and provides a unified interface to the outside.

In some embodiments, the operation request includes a write operation request and/or a read operation request for a Bdev of the virtual machine cluster.

Here, the write operation request for the Bdev is an operation of writing data to the Bdev; and the read operation request for the Bdev is an operation of reading data from the Bdev.

In the embodiments of the present disclosure, the IO operation of the Bdev can be controlled based on the target layer to reasonably utilize the resources of the Bdev in the virtual machine cluster based on the SPDK architecture.

In some embodiments, the target layer includes at least one of the following control layers:
1) An entire machine layer, including a plurality of virtual machines in the virtual machine cluster, configured to control the overall quality of service of the plurality of virtual machines based on a target token bucket of the entire machine layer.
   In the embodiments of the present disclosure, the control of the quality of service can be added at the entire machine level by taking the entire machine layer as the target layer, realizing the management and control of the overall quality of service of the virtual machine cluster.
2) A virtual machine layer configured to, for each virtual machine among the plurality of virtual machines, control the quality of service of the virtual machine by using a target token bucket of the virtual machine.

Here, the virtual machine may be Qemu-KVM, and the Qemu is a common virtual machine simulator in the industry. After startup, the Qemu is a user process running on the physical machine, and is used to simulate various external devices such as disks and network cards of the virtual machine; the KVM is a kernel module for implementing the virtualization technology, and realizes the CPU instructions and memory access simulation of the virtual machine; and the Qemu and KVM works together to provide users with the complete simulation of the virtual machine.

The control of the quality of service at the virtual machine layer can implement individual control of the quality of service of each virtual machine. For example, the virtual machine cluster includes m virtual machines. At the virtual machine layer, the quality of service may be controlled respectively for the m virtual machines, and each virtual machine has its own corresponding target token bucket. The token generation rate in the target token bucket of each virtual machine may be determined according to the upper limit of the quality of service of each virtual machine. For example, the upper limit of the quality of service of virtual machine m1 is a, and the upper limit of the quality of service of virtual machine m2 is b. When a is greater than b, the quantity of tokens generated per unit time in the target token bucket of virtual machine m1 is higher than that of virtual machine m2. In this way, different virtual machines are isolated at the virtual machine layer, to implement individual control of the quality of service of different virtual machines.

In the embodiments of the present disclosure, the quality of service can be controlled separately for different virtual machines by adding the upper limit of the quality of service at the virtual machine layer. For example, the differentiated resource allocation can be performed for different virtual machines to improve the resource management efficiency and flexibility.

3) A block device Bdev layer configured to, for each Bdev of the virtual machine cluster, control the quality of service of the Bdev by using a target token bucket corresponding to the Bdev.

Here, the block device Bdev is the basic abstract concept of the SPDK and is used to represent a storage device, and may be a traditional hard disk drive, solid-state drive, NVMe SSD, etc. The SPDK represents a virtualized IO acceleration scheme, acts as a proxy layer between a virtual machine-simulated disk device and a physical machine disk hardware, builds a connection between the back end of the virtual IO queue and the virtual machine-simulated device, provides a user-level NVMe driver to manage the disk device, and processes requests on the IO queue and responses of the NVMe disk in a polling manner, reducing the loss on the IO path of the virtual machine.

One SPDK may manage a plurality of Bdevs. Different Bdevs may correspond to their own target token buckets to implement the control of the quality of service of different Bdevs.

In the embodiments of the present disclosure, the control of the quality of service of different Bdevs is implemented at the block device Bdev layer, and the flexible control of the quality of service of the block device layer is achieved.

In some embodiments, the upper limit of the quality of service of each virtual machine in the virtual machine layer is determined based on the performance of each virtual machine; and similarly, the upper limit of the quality of service of each Bdev in the Bdev layer is determined based on the performance of each Bdev.

Here, the upper limit of the quality of service may be set as follows: the upper limit of the quality of service of the entire machine layer > the upper limit of the quality of service of the virtual machine layer > the upper limit of the quality of service of the block device Bdev layer.

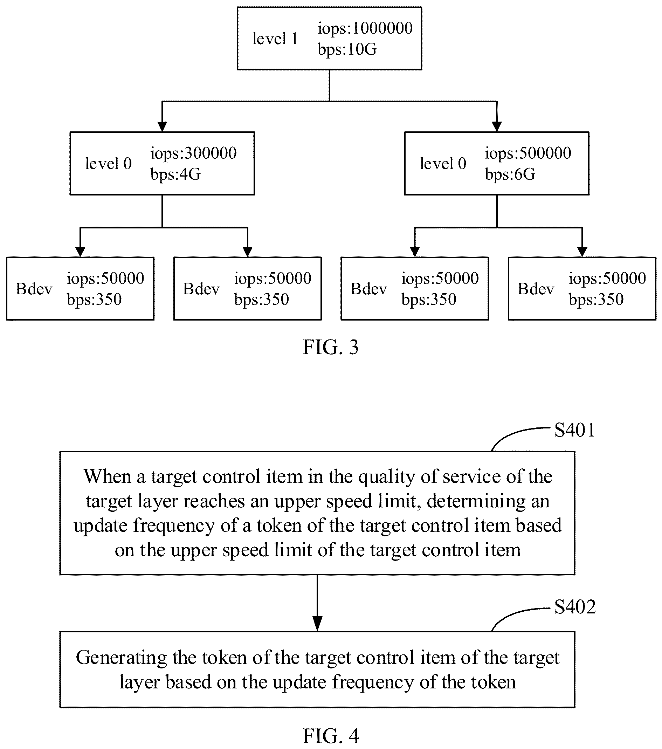

During implementation, the target layer includes the entire machine layer, the virtual machine layer and the block device Bdev layer; and the entire machine layer, the virtual machine layer and the block device Bdev layer can all enable the use of token buckets to control the quality of service. Exemplarily, FIG. 3 shows the upper limits of the quality of service of the above three layers by taking a specific example. In FIG. 3, the IOPS (Input/Output Per Second) of level 1 represents the upper limit of the number of operations per second of the entire machine layer, and the BPS (Bits Per Second) of level 1 is the upper limit of the bit rate corresponding to the bandwidth, that is, the upper limit of the amount of data that can be transmitted by the entire machine layer in unit time; the IOPS of level 0 represents the upper limit of the number of operations per second of the virtual machine layer, and the BPS of level 0 is the upper limit of the bit rate corresponding to the bandwidth, that is, the upper limit of the amount of data that can be transmitted by the virtual machine layer in unit time. Here, the BPS and IOPS may be set by each virtual machine layer based on its own actual condition, and may be the same or different. The IOPS and BPS of Bdev respectively represent the upper limit of the number of operations per second and the upper limit of the amount of data transmitted per unit time of each Bdev.

In the embodiments of the present disclosure, since the conditions of the layers are different, the upper limit of the quality of service is set based on the actual condition so that the quality of service of each device is within a reasonable and controllable range, thereby improving the control efficiency of the quality of service.

In the related art, the SPDK-based architecture can only implement the control of the quality of service at the Bdev layer, but cannot distinguish the control of storage resources and network resources effectively. In view of this, in an embodiment of the present disclosure, for the target layer, the quality of service includes at least one of the following service items: the number of operations per second, and bandwidth; where each service item uses a separate token bucket to control the quality of service.

The number of operations per second represents the number of input/output operations per second, is an important indicator for measuring the performance test of the storage device of the target layer, and indicates the number of read and write operations that the storage device can complete per second.

The bandwidth represents the amount of data that can be transmitted per unit time, and reflects the capacity of the data transmission channel. Here, the unit time may be within 1 second.

It can be understood that each service item uses its own token bucket to control the quality of service.

For example, for the entire machine layer, virtual machine layer and Bdev layer, the first token bucket may be used to control the quality of service for the number of operations per second; and the second token bucket may be used to control the quality of service for the bandwidth, where the control of quality of service of the first token bucket and the second token bucket is performed independently, so that the independent control of bandwidth resources and storage resources can be implemented at the target layer. When the control of quality of service is performed on the number of operations per second of the target layer, the first token bucket is the target token bucket. When the control of quality of service is performed on the bandwidth of the target layer, the second token bucket is the target token bucket. When the control of quality of service is required for both the bandwidth and the number of operations per second, the first token bucket and the second token bucket are respectively used as target token buckets to decide whether to issue an operation request. When the available token quantity in at least one of the first token bucket and the second token bucket cannot meet the target token quantity required for the operation request, the operation request needs to be suspended and stored in the target queue and can only be issued when the token quantity is sufficient.

Taking the entire machine layer as an example, the entire machine layer performs overall control of the quality of service of the whole virtual machine cluster, so there is one first token bucket and one second token bucket. When the control of quality of service is performed on the number of operations per second of the entire machine layer, the first token bucket is the target token bucket. When the control of quality of service is performed on the bandwidth of the entire machine layer, the second token bucket is the target token bucket. When the control of quality of service is required for both the bandwidth and the number of operations per second, the first token bucket and the second token bucket are respectively used as target token buckets to decide whether to issue an operation request. When the available token quantity in at least one of the first token bucket and the second token bucket cannot meet the target token quantity required for the operation request, the operation request needs to be suspended and stored in the target queue corresponding to the entire machine layer and can only be issued when the token quantity is sufficient.

Taking a single virtual machine in the virtual machine layer as an example, the virtual machine layer controls the quality of service of each virtual machine individually, and each virtual machine has one corresponding first token bucket and one corresponding second token bucket. When the control of quality of service is performed on the number of operations per second of the virtual machine, the first token bucket of the virtual machine is the target token bucket. When the control of quality of service is performed on the bandwidth of the virtual machine, the second token bucket of the virtual machine is the target token bucket. When the control of quality of service is required for both the bandwidth and the number of operations per second of the virtual machine, the first token bucket and the second token bucket of the virtual machine are respectively used as target token buckets to decide whether to issue an operation request. When the available token quantity in at least one of the first token bucket and the second token bucket cannot meet the target token quantity required for the operation request, the operation request needs to be suspended and stored in the target queue corresponding to the virtual machine and can only be issued when the token quantity is sufficient.

Taking a single Bdev in the Bdev layer as an example, the Bdev layer controls the quality of service of each Bdev individually. Each Bdev corresponds to one first token bucket and one second token bucket respectively. When the control of quality of service is performed on the number of operations per second of the Bdev, the first token bucket of the Bdev is the target token bucket. When the control of quality of service is performed on the bandwidth of the Bdev, the second token bucket of the Bdev is the target token bucket. When the control of quality of service is required for both the bandwidth and the number of operations per second of the Bdev, the first token bucket and the second token bucket of the Bdev are respectively used as target token buckets to decide whether to issue an operation request. When the available token quantity in at least one of the first token bucket and the second token bucket of the Bdev cannot meet the target token quantity required for the operation request, the operation request needs to be suspended and stored in the target queue of the Bdev layer and can only be issued when the token quantity is sufficient.

In the embodiments of the present disclosure, the number of operations per second can limit the number of read and write operations that can be completed per second, and the bandwidth can limit the amount of data transmitted. The combination thereof can achieve the independent control of the bandwidth and storage resources, thereby limiting the control efficiency of the quality of service of the target layer as a whole.

In some embodiments, when the service item includes the number of operations per second, the target token bucket includes at least one first sub-token bucket, and at least one of following first sub-control items in the number of operations per second is controlled separately using a corresponding first sub-token bucket:
a total upper limit of write operations and read operations per second;
a write upper limit of write operations per second; or
a read upper limit of read operations per second.

Here, the total upper limit of write operations and read operations per second, the write upper limit of write operations per second and the read upper limit of read operations per second may be set based on the actual situation of the target layer itself, and are not limited in the embodiments of the present disclosure.

During implementation, for different layers, the first token bucket of the corresponding layer may be divided into a first sub-token bucket 1, a first sub-token bucket 2 and a first sub-token bucket 3. For example, for the entire machine layer, virtual machine layer and Bdev layer, the first sub-token bucket 1 implements the control of the quality of service for the number of write operations per second, the first sub-token bucket 2 implements the control of the quality of service for the number of read operations per second, and the first sub-token bucket 3 implements the control of the quality of service for the total number of read and write operations per second. Here, the control of the quality of service is performed independently for the number of write operations and the number of read operations based on the first sub-token bucket 1 and the first sub-token bucket 2, and the control of the quality of service for the total number of read and write operations is implemented based on the first sub-token bucket 3, so that the independent control of each sub-control item in the target layer can be implemented.

When the operation request is a write operation, the first sub-token bucket 1 is the target token bucket; if the total number of read and write operations is controlled, the first sub-token bucket 3 is also the target token bucket. Similarly, when the operation request is a read operation, the first sub-token bucket 2 is the target token bucket; if the total number of read and write operations is controlled, the first sub-token bucket 3 is also the target token bucket. When the operation request includes a write operation and a read operation, the first sub-token bucket 1, the first sub-token bucket 2 and the first sub-token bucket 3 are respectively used as target token buckets. When the available token quantity in at least one of these target token buckets cannot meet the target token quantity required for the operation request, the operation request needs to be suspended and stored in the target queue corresponding to the target layer and can only be issued when the available token quantity is sufficient.

Taking the entire machine layer as an example, the entire machine layer performs overall control of the quality of service of the whole virtual machine cluster, so the first token bucket contains the first sub-token bucket 1, the first sub-token bucket 2 and the first sub-token bucket 3. When the control of quality of service is performed on the number of operations per second of the entire machine layer and when the operation request is a write operation, the first sub-token bucket 1 is the target token bucket; if the total number of read and write operations of the entire machine layer is controlled, the first sub-token bucket 3 is also the target token bucket. Similarly, when the operation request is a read operation, the first sub-token bucket 2 is the target token bucket; if the total number of read and write operations of the entire machine layer is controlled, the first sub-token bucket 3 is also the target token bucket. When the operation request includes a write operation and a read operation, the first sub-token bucket 1, the first sub-token bucket 2 and the first sub-token bucket 3 are respectively used as target token buckets. When the available token quantity in at least one of these target token buckets cannot meet the target token quantity required for the operation request, the operation request needs to be suspended and stored in the target queue corresponding to the entire machine layer and can only be issued when the available token quantity is sufficient.

Taking a single virtual machine in the virtual machine layer as an example, the virtual machine layer controls the quality of service of each virtual machine individually, so the first token bucket contains the first sub-token bucket 1, the first sub-token bucket 2 and the first sub-token bucket 3. When the control of quality of service is performed on the number of operations per second of the virtual machine layer and when the operation request is a write operation, the first sub-token bucket 1 is the target token bucket; if the total number of read and write operations of the virtual machine layer is controlled, the first sub-token bucket 3 is also the target token bucket. Similarly, when the operation request is a read operation, the first sub-token bucket 2 is the target token bucket; if the total number of read and write operations of the virtual machine layer is controlled, the first sub-token bucket 3 is also the target token bucket. When the operation request includes a write operation and a read operation, the first sub-token bucket 1, the first sub-token bucket 2 and the first sub-token bucket 3 are respectively used as target token buckets. When the available token quantity in at least one of these target token buckets cannot meet the target token quantity required for the operation request, the operation request needs to be suspended and stored in the target queue corresponding to the virtual machine layer and can only be issued when the available token quantity is sufficient.

Taking a single Bdev in the Bdev layer as an example, the Bdev layer controls the quality of service of each Bdev individually, so the first token bucket contains the first sub-token bucket 1, the first sub-token bucket 2 and the first sub-token bucket 3. When the control of quality of service is performed on the number of operations per second of the Bdev layer and when the operation request is a write operation, the first sub-token bucket 1 is the target token bucket; if the total number of read and write operations of the Bdev layer is controlled, the first sub-token bucket 3 is also the target token bucket. Similarly, when the operation request is a read operation, the first sub-token bucket 2 is the target token bucket; if the total number of read and write operations of the Bdev layer is controlled, the first sub-token bucket 3 is also the target token bucket. When the operation request includes a write operation and a read operation, the first sub-token bucket 1, the first sub-token bucket 2 and the first sub-token bucket 3 are respectively used as target token buckets. When the available token quantity in at least one of these target token buckets cannot meet the target token quantity required for the operation request, the operation request needs to be suspended and stored in the target queue corresponding to the block device Bdev layer and can only be issued when the available token quantity is sufficient.

In the embodiments of the present disclosure, the number of operations per second controls the upper limit of read operations and write operations, improving the management and control efficiency of the storage performance of the target layer, and further improving the resource management efficiency.

In some embodiments, when the service item includes the bandwidth, the target token bucket includes at least one second sub-token bucket, and at least one of following second sub-control items in the bandwidth is controlled separately using a corresponding second sub-token bucket:
an upper limit of total bandwidth for write operations and read operations per second;
an upper limit of bandwidth for write operations per second; or
an upper limit of bandwidth for read operations per second.

Here, the upper limit of total bandwidth for write operations and read operations per second, the upper limit of bandwidth for write operations per second and the upper limit of bandwidth for read operations per second may be set based on the actual situation of the target layer itself, and are not limited in the embodiments of the present disclosure.

During implementation, when the second token bucket implements the control of the quality of service of the bandwidth, the second token bucket may be divided into a second sub-token bucket 1, a second sub-token bucket 2 and a second sub-token bucket 3. For example, for the entire machine layer, virtual machine layer and Bdev layer, the second sub-token bucket 1 implements the control of the quality of service of the bandwidth for write operations per second, the second sub-token bucket 2 implements the control of the quality of service of the bandwidth for read operations per second, and the second sub-token bucket 3 implements the control of the quality of service of the total bandwidth for write operations and read operations per second. Here, the control of the quality of service of the bandwidth is independently performed based on the second sub-token bucket 1 and the second sub-token bucket 2, and the control of the quality of service of the total bandwidth for reading and writing is implemented based on the second sub-token bucket 3, so that the independent control of each sub-control item in the target layer can be implemented.

When the operation request is a write operation, the second sub-token bucket 1 is the target token bucket; if the total bandwidth for reading and writing is controlled, the second sub-token bucket 3 is also the target token bucket. Similarly, when the operation request is a read operation, the second sub-token bucket 2 is the target token bucket; if the total bandwidth for reading and writing is controlled, the second sub-token bucket 3 is also the target token bucket. When the operation request includes a write operation and a read operation, the second sub-token bucket 1, the second sub-token bucket 2 and the second sub-token bucket 3 are respectively used as target token buckets. When the available token quantity in at least one of these target token buckets cannot meet the target token quantity required for the operation request, the operation request needs to be suspended and stored in the target queue corresponding to the target layer and can only be issued when the available token quantity is sufficient.

Taking the entire machine layer as an example, the entire machine layer performs overall control of the quality of service of the whole virtual machine cluster, so the second token bucket contains the second sub-token bucket 1, the second sub-token bucket 2 and the second sub-token bucket 3. When the control of quality of service is performed on the bandwidth per second of the entire machine layer and when the operation request is a write operation, the second sub-token bucket 1 is the target token bucket; if the total bandwidth for read and write operations of the entire machine layer is controlled, the second sub-token bucket 3 is also the target token bucket. Similarly, when the operation request is a read operation, the second sub-token bucket 2 is the target token bucket; if the total bandwidth for read and write operations of the entire machine layer is controlled, the second sub-token bucket 3 is also the target token bucket. When the operation request includes a write operation and a read operation, the second sub-token bucket 1, the second sub-token bucket 2 and the second sub-token bucket 3 are respectively used as target token buckets. When the available token quantity in at least one of these target token buckets cannot meet the target token quantity required for the operation request, the operation request needs to be suspended and stored in the target queue corresponding to the entire machine layer and can only be issued when the available token quantity is sufficient.

Taking a single virtual machine in the virtual machine layer as an example, the virtual machine layer controls the quality of service of each virtual machine individually, so the second token bucket contains the second sub-token bucket 1, the second sub-token bucket 2 and the second sub-token bucket 3. When the control of quality of service is performed on the bandwidth per second of the virtual machine layer and when the operation request is a write operation, the second sub-token bucket 1 is the target token bucket; if the total bandwidth for read and write operations of the virtual machine layer is controlled, the second sub-token bucket 3 is also the target token bucket. Similarly, when the operation request is a read operation, the second sub-token bucket 2 is the target token bucket; if the total bandwidth for read and write operations of the virtual machine layer is controlled, the second sub-token bucket 3 is also the target token bucket. When the operation request includes a write operation and a read operation, the second sub-token bucket 1, the second sub-token bucket 2 and the second sub-token bucket 3 are respectively used as target token buckets. When the available token quantity in at least one of these target token buckets cannot meet the target token quantity required for the operation request, the operation request needs to be suspended and stored in the target queue corresponding to the virtual machine layer and can only be issued when the available token quantity is sufficient.

Taking a single Bdev in the Bdev layer as an example, the Bdev layer controls the quality of service of each Bdev individually, so the second token bucket contains the second sub-token bucket 1, the second sub-token bucket 2 and the second sub-token bucket 3. When the control of quality of service is performed on the bandwidth per second of the Bdev layer and when the operation request is a write operation, the second sub-token bucket 1 is the target token bucket; if the total bandwidth for read and write operations of the Bdev layer is controlled, the second sub-token bucket 3 is also the target token bucket. Similarly, when the operation request is a read operation, the second sub-token bucket 2 is the target token bucket; if the total bandwidth for read and write operations of the Bdev layer is controlled, the second sub-token bucket 3 is also the target token bucket. When the operation request includes a write operation and a read operation, the second sub-token bucket 1, the second sub-token bucket 2 and the second sub-token bucket 3 are respectively used as target token buckets. When the available token quantity in at least one of these target token buckets cannot meet the target token quantity required for the operation request, the operation request needs to be suspended and stored in the target queue corresponding to the Bdev layer and can only be issued when the available token quantity is sufficient.

Continuing with the above, when the operation request is a write request and when the control of quality of service is performed on the number of operations per second and the bandwidth of the target layer, the first sub-token bucket 1 and the second sub-token bucket 1 are used as target token buckets; if the number of operations per second and the total bandwidth for read and write operations of the target layer are controlled, the first sub-token bucket 3 and the second sub-token bucket 3 are also target token buckets. When the operation request is a read request and when the control of quality of service is performed on the number of operations per second and the bandwidth of the target layer, the first sub-token bucket 2 and the second sub-token bucket 2 are used as target token buckets; if the number of operations per second and the total bandwidth for read and write operations of the target layer are controlled, the first sub-token bucket 3 and the second sub-token bucket 3 are also target token buckets respectively.

In the embodiments of the present disclosure, the control on the upper limit of read operations and write operations based on bandwidth can manage and control the network performance of the target layer effectively, to further improve the resource management efficiency.

In some embodiments, the specific process of generating the tokens of the target layer is shown in FIG. 4:
S401: when a target control item in the quality of service of the target layer reaches an upper speed limit, determining an update frequency of a token of the target control item based on the upper speed limit of the target control item.
S402: generating the token of the target control item of the target layer based on the update frequency of the token.

During implementation, when the target control item is the upper limit of total bandwidth for write operations and read operations per second being a, the number of bytes supported every 1s is a*1024*1024 bytes, and then the number of bytes generated every 1ms is (a*1024*1024)/1000. Assuming that one token supports n bytes, the update frequency of the token is n/[(a*1024*1024)/1000] ms, that is, one token is generated every n/[(a*1024*1024)/1000] ms.

During implementation, when the target control item is the upper limit of bandwidth for write operations per second being b, the number of bytes generated every 1s is b*1024*1024 bytes, and then the number of bytes generated every 1ms is (b*1024*1024)/1000. Assuming that one token supports n bytes, the update frequency of the token is n/[(b*1024*1024)/1000] ms, that is, one token is generated every n/[(b*1024*1024)/1000] ms.

During implementation, when the target control item is the upper limit of bandwidth for read operations per second being c, the number of bytes generated every 1s is c* 1024* 1024 bytes, and then the number of bytes generated every 1ms is (c*1024*1024)/1000. Assuming that one token supports n bytes, the update frequency of the token is n/[(c*1024*1024)/1000] ms, that is, one token is generated every n/[(c*1024*1024)/1000] ms. It should be noted that b and c are both positive numbers less than a, and n is a positive number.

During implementation, when the target control item is the upper limit of the total number of write operations and read operations per second being d, the number of operations that can be processed every 1s is d, and then the number of operations that can be processed every 1ms is d/1000. Assuming that one token supports n operations, the update frequency of the token is n/(d/1000) ms, that is, one token is generated every n/(d/1000) ms.

During implementation, when the target control item is the upper limit of the number of write operations per second being e, the number of write operations that can be processed every 1s is e, and then the number of write operations that can be processed every 1ms is e/1000. Assuming that one token supports n operations, the update frequency of the token is n/(e/1000) ms, that is, one token is generated every n/(e/1000) ms.

During implementation, when the target control item is the upper limit of the number of read operations per second being f, the number of read operations that can be processed every 1s is f, and then the number of read operations that can be processed every 1ms is f/1000. Assuming that one token supports n operations, the update frequency of the token is n/(f/1000) ms, that is, one token is generated every n/(f/1000) ms. Here, d is greater than e and f; and d, e and f are all positive numbers.

In the embodiments of the present disclosure, on the basis of reaching the speed limit, the tokens of the target layer are generated based on the token update frequency, effectively controlling the balance between token update and consumption to improve the control accuracy of quality of service.

In some embodiments, in response to an enabling operation for the target layer to enable a token bucket to control quality of service, the quality of service of the target layer is controlled by using the token bucket; or in response to a message of not enabling a token bucket to control quality of service of the target layer, the quality of service of the target layer is controlled in a default manner.

Here, the quality of service of the target layer may be determined to be enabled or disabled based on actual conditions.

The quality of service of the target layer is controlled in a default manner, that is, a method for controlling quality of service other than the token bucket mechanism is used.

At least one of the first sub-control items and the second sub-control items in the service item in the target layer may be enabled or disabled. When the target layer enables the control of the quality of service of write operations per second in the number of operations per second, the first sub-token bucket 1 is enabled as the target token bucket. When the target layer enables the control of the quality of service of read operations per second in the number of operations per second, the first sub-token bucket 2 is enabled as the target token bucket. By analogy, each sub-token bucket may be enabled or disabled independently.

In the embodiments of the present disclosure, whether the target layer enables the token bucket to control the quality of service depends on actual conditions, making this method more universal.

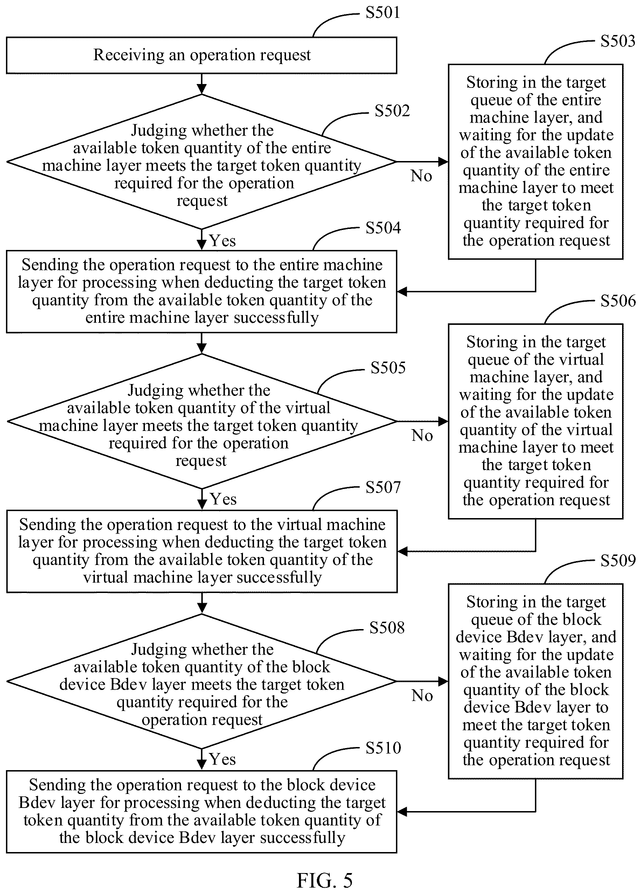

When the target layer includes the entire machine layer, the virtual machine layer and the block device Bdev layer, and when the entire machine layer, the virtual machine layer and the Bdev layer all enable the token bucket mechanism to control the quality of service, the whole process is implemented as shown in FIG. 5, including:
S501: receiving an operation request.
S502: judging whether the available token quantity of the entire machine layer meets the target token quantity required for the operation request. If not, S503 is executed; if so, S504 is executed.
S503: storing in the target queue of the entire machine layer, and waiting for the update of the available token quantity of the entire machine layer. S504 is executed when the available token quantity of the entire machine layer is updated to meet the target token quantity required for the operation request.
S504: sending the operation request to the entire machine layer for processing when deducting the target token quantity from the available token quantity of the entire machine layer successfully.
S505: judging whether the available token quantity of the virtual machine layer meets the target token quantity required for the operation request. If not, S506 is executed; if so, S507 is executed.
S506: storing in the target queue of the virtual machine layer, and waiting for the update of the available token quantity of the virtual machine layer. S507 is executed when the available token quantity of the virtual machine layer is updated to meet the target token quantity required for the operation request.
S507: sending the operation request to the virtual machine layer for processing when deducting the target token quantity from the available token quantity of the virtual machine layer successfully.
S508: judging whether the available token quantity of the block device Bdev layer meets the target token quantity required for the operation request. If not, S509 is executed; if so, S510 is executed.
S509: storing in the target queue of the block device Bdev layer, and waiting for the update of the available token quantity of the block device Bdev layer. S510 is executed when the available token quantity of the block device Bdev layer is updated to meet the target token quantity required for the operation request.
S510: sending the operation request to the block device Bdev layer for processing when deducting the target token quantity from the available token quantity of the block device Bdev layer successfully.

In the related art, the QoS is generally only implemented for the Bdev layer. During implementation, the storage performance is uniformly managed and controlled at the Bdev layer to ensure that different applications or services can access storage resources according to the predetermined performance requirement. The SPDK defines a variety of QoS indicators (such as IOPS, BPS, etc.) at the Bdev layer. However, since hundreds of virtual machines share underlying hardware resources in the cloud computing platform, the setting of the QoS only at the Bdev layer may have the following problems:
1. Uneven allocation of global resources: the QoS at the Bdev layer mainly manages the performance of block devices, but cannot globally consider the resource allocation among multiple virtual machines, possibly causing some virtual machines to excessively occupy resources while other virtual machines cannot get adequate performance guarantees.
2. Confusion between network and storage resources: the network and storage are two core resources in the cloud computing platform. The setting of the QoS only at the Bdev layer cannot effectively distinguish and manage these two types of resources, possibly causing network congestion to affect the storage performance or causing storage bottleneck to limit the network efficiency.

Therefore, in the embodiments of the present disclosure, three levels of QoS indicators (IOPS, BPS, etc.) are defined in combination with the overall performance of the virtual machines and the individual performance of each virtual machine, so that the resource allocation among multiple virtual machines can be considered globally. Moreover, the independent control of the bandwidth and storage resources can be implemented, to distinguish and manage these two types of resources, and ensure the overall control efficiency of the quality of service of the cloud computing platform.

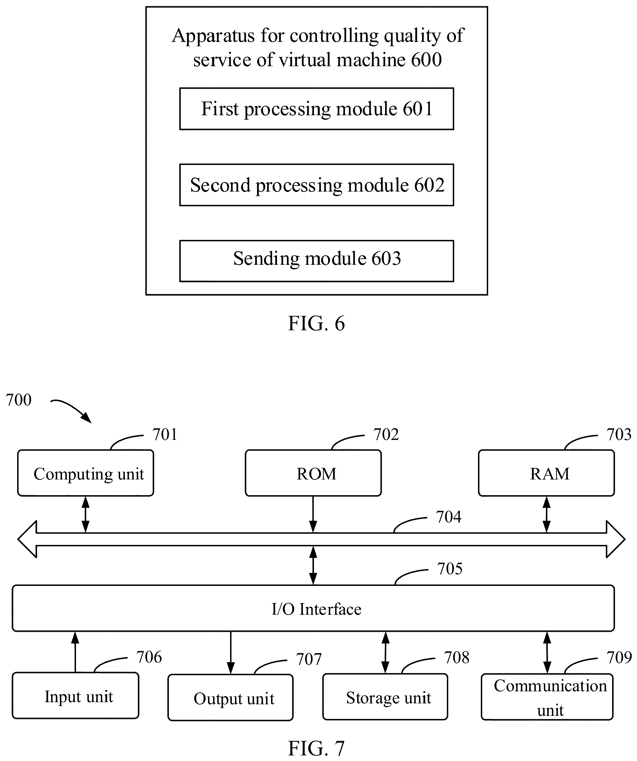

Based on the same technical concept, an embodiment of the present disclosure further proposes an apparatus 600 for controlling quality of service of a virtual machine, as shown in FIG. 6, including:
a first processing module 601 configured to store an operation request in a target queue corresponding to a target layer of a virtual machine cluster when an available token quantity in a target token bucket of the target layer is unable to meet a target token quantity required for the operation request; where tokens of the target layer are periodically generated according to an upper limit of quality of service of the target layer;
a second processing module 602 configured to deduct the target token quantity from an updated available token quantity when the available token quantity in the target token bucket is updated to meet the target token quantity required for the operation request; and
a sending module 603 configured to send the operation request from the target queue to the target layer for processing when deducting the target token quantity successfully.

In some embodiments, the target layer includes at least one of following control layers:
an entire machine layer, including a plurality of virtual machines in the virtual machine cluster, configured to control overall quality of service of the plurality of virtual machines based on a target token bucket of the entire machine layer;
a virtual machine layer configured to, for each virtual machine among the plurality of virtual machines, control quality of service of the virtual machine by using a target token bucket of the virtual machine; or
a block device Bdev layer configured to, for each Bdev of the virtual machine cluster, control quality of service of the Bdev by using a target token bucket corresponding to the Bdev.

In some embodiments, an upper limit of quality of service of each virtual machine in the virtual machine layer is determined based on performance of each virtual machine; and
an upper limit of quality of service of each Bdev in the Bdev layer is determined based on performance of each Bdev.

In some embodiments, the apparatus further includes a third processing module configured to:
in response to an enabling operation for the target layer to enable a token bucket to control quality of service, control the quality of service of the target layer by using the token bucket; or
in response to a message of not enabling a token bucket to control quality of service of the target layer, control the quality of service of the target layer in a default manner.

In some embodiments, for the target layer, the quality of service includes at least one of following service items: the number of operations per second, and bandwidth;
where each service item uses a separate token bucket to control quality of service.

In some embodiments, when the service item includes the number of operations per second, the target token bucket includes at least one first sub-token bucket, and at least one of following first sub-control items in the number of operations per second is controlled separately using a corresponding first sub-token bucket:
a total upper limit of write operations and read operations per second;
a write upper limit of write operations per second; or
a read upper limit of read operations per second.

In some embodiments, when the service item includes the bandwidth, the target token bucket includes at least one second sub-token bucket, and at least one of following second sub-control items in the bandwidth is controlled separately using a corresponding second sub-token bucket:
an upper limit of total bandwidth for write operations and read operations per second;
an upper limit of bandwidth for write operations per second; or
an upper limit of bandwidth for read operations per second.

In some embodiments, the apparatus further includes a generating module configured to:
when a target control item in the quality of service of the target layer reaches an upper speed limit, determine an update frequency of a token of the target control item based on the upper speed limit of the target control item; and
generate the token of the target control item of the target layer based on the update frequency of the token.

In some embodiments, the apparatus further includes a fourth processing module configured to:
send the operation request to the target layer for processing when the available token quantity of the target layer meets the target token quantity required for the operation request and the target token quantity is successfully deducted from the available token quantity.

In some embodiments, the operation request includes a write operation request and/or a read operation request for a Bdev of the virtual machine cluster.

For the description of specific functions and examples of the modules and sub-modules of the apparatus of the embodiment of the present disclosure, reference may be made to the relevant description of the corresponding steps in the above-mentioned method embodiments, and details are not repeated here.

In the technical solution of the present disclosure, the acquisition, storage and application of the user's personal information involved are in compliance with relevant laws and regulations, and do not violate public order and good customs.

According to the embodiments of the present disclosure, the present disclosure also provides an electronic device, a readable storage medium and a computer program product.

FIG. 7 shows a schematic block diagram of an exemplary electronic device 700 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital assistant, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 7, the device 700 includes a computing unit 701 that may perform various appropriate actions and processes according to a computer program stored in a Read-Only Memory (ROM) 702 or a computer program loaded from a storage unit 708 into a Random Access Memory (RAM) 703. Various programs and data required for an operation of device 700 may also be stored in the RAM 703. The computing unit 701, the ROM 702 and the RAM 703 are connected to each other through a bus 704. The input/output (I/O) interface 705 is also connected to the bus 704.

A plurality of components in the device 700 are connected to the I/O interface 705, and include an input unit 706 such as a keyboard, a mouse, or the like; an output unit 707 such as various types of displays, speakers, or the like; the storage unit 708 such as a magnetic disk, an optical disk, or the like; and a communication unit 709 such as a network card, a modem, a wireless communication transceiver, or the like. The communication unit 709 allows the device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 701 performs various methods and processes described above, such as the method for controlling the quality of service of the virtual machine. For example, in some implementations, the method for controlling the quality of service of the virtual machine may be implemented as a computer software program tangibly contained in a computer-readable medium, such as the storage unit 708. In some implementations, a part or all of the computer program may be loaded and/or installed on the device 700 via the ROM 702 and/or the communication unit 709. When the computer program is loaded into the RAM 703 and executed by the computing unit 701, one or more steps of the method for controlling the quality of service of the virtual machine described above may be performed. Alternatively, in other implementations, the computing unit 701 may be configured to perform the method for controlling the quality of service of the virtual machine by any other suitable means (e.g., by means of firmware).

Various implementations of the system and technologies described above herein may be implemented in a digital electronic circuit system, an integrated circuit system, a Field Programmable Gate Array (FPGA), an Application Specific Integrated Circuit (ASIC), an Application Specific Standard Product (ASSP), a System on Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other through any form or kind of digital data communication (e.g., a communication network). Examples of the communication network include a Local Area Network (LAN), a Wide Area Network (WAN), and the Internet.

A computer system may include a client and a server. The client and server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A method for controlling quality of service of a virtual machine, **characterized by** comprising:
storing (S101) an operation request in a target queue corresponding to a target layer of a virtual machine cluster, in a case of an available token quantity in a target token bucket of the target layer is unable to meet a target token quantity required for the operation request; wherein tokens of the target layer are periodically generated according to an upper limit of quality of service of the target layer;
deducting (S102) the target token quantity from an updated available token quantity, in a case of the available token quantity in the target token bucket is updated to meet the target token quantity required for the operation request; and
sending (S103) the operation request from the target queue to the target layer for processing, in a case of deducting the target token quantity successfully.

2. The method of claim 1, wherein the target layer comprises at least one of following control layers:
an entire machine layer, comprising a plurality of virtual machines in the virtual machine cluster, configured to control overall quality of service of the plurality of virtual machines based on a target token bucket of the entire machine layer;
a virtual machine layer configured to, for each virtual machine among the plurality of virtual machines, control quality of service of the virtual machine by using a target token bucket of the virtual machine; or
a block device Bdev layer configured to, for each Bdev of the virtual machine cluster, control quality of service of the Bdev by using a target token bucket corresponding to the Bdev.

3. The method of claim 2, wherein an upper limit of quality of service of each virtual machine in the virtual machine layer is determined based on performance of each virtual machine; and
an upper limit of quality of service of each Bdev in the Bdev layer is determined based on performance of each Bdev.

4. The method of claim 2, further comprising:
in response to an enabling operation for the target layer to enable a token bucket to control quality of service, controlling the quality of service of the target layer by using the token bucket; or
in response to a message of not enabling a token bucket to control quality of service of the target layer, controlling the quality of service of the target layer in a default manner.

5. The method of claim 1 or 2, wherein for the target layer, the quality of service comprises at least one of following service items: the number of operations per second, and bandwidth;
wherein each service item uses a separate token bucket to control quality of service;
wherein, in a case of the service item comprises the number of operations per second, the target token bucket comprises at least one first sub-token bucket, and at least one of following first sub-control items in the number of operations per second is controlled separately using a corresponding first sub-token bucket:
a total upper limit of write operations and read operations per second;
a write upper limit of write operations per second; or
a read upper limit of read operations per second;
wherein, in a case of the service item comprises the bandwidth, the target token bucket comprises at least one second sub-token bucket, and at least one of following second sub-control items in the bandwidth is controlled separately using a corresponding second sub-token bucket:
an upper limit of total bandwidth for write operations and read operations per second;
an upper limit of bandwidth for write operations per second; or
an upper limit of bandwidth for read operations per second.

6. The method of any one of claims 1 to 5, wherein generating tokens of the target layer, comprises:
in a case of a target control item in the quality of service of the target layer reaches an upper speed limit, determining an update frequency of a token of the target control item based on the upper speed limit of the target control item; and
generating the token of the target control item of the target layer based on the update frequency of the token.

7. The method of any one of claims 1 to 6, further comprising:
sending the operation request to the target layer for processing, in a case of the available token quantity of the target layer meets the target token quantity required for the operation request and the target token quantity is successfully deducted from the available token quantity.

8. The method of claim 1, wherein the operation request comprises a write operation request and/or a read operation request for a Bdev of the virtual machine cluster.

9. An apparatus for controlling quality of service of a virtual machine, **characterized by** comprising:
a first processing module (601) configured to store an operation request in a target queue corresponding to a target layer of a virtual machine cluster, in a case of an available token quantity in a target token bucket of the target layer is unable to meet a target token quantity required for the operation request; wherein tokens of the target layer are periodically generated according to an upper limit of quality of service of the target layer;
a second processing module (602) configured to deduct the target token quantity from an updated available token quantity, in a case of the available token quantity in the target token bucket is updated to meet the target token quantity required for the operation request; and
a sending module (603) configured to send the operation request from the target queue to the target layer for processing, in a case of deducting the target token quantity successfully.

10. The apparatus of claim 9, wherein the target layer comprises at least one of following control layers:
an entire machine layer, comprising a plurality of virtual machines in the virtual machine cluster, configured to control overall quality of service of the plurality of virtual machines based on a target token bucket of the entire machine layer;
a virtual machine layer configured to, for each virtual machine among the plurality of virtual machines, control quality of service of the virtual machine by using a target token bucket of the virtual machine; or
a block device Bdev layer configured to, for each Bdev of the virtual machine cluster, control quality of service of the Bdev by using a target token bucket corresponding to the Bdev.

11. The apparatus of claim 10, wherein an upper limit of quality of service of each virtual machine in the virtual machine layer is determined based on performance of each virtual machine; and
an upper limit of quality of service of each Bdev in the Bdev layer is determined based on performance of each Bdev.

12. The apparatus of claim 10, further comprising a third processing module configured to:
in response to an enabling operation for the target layer to enable a token bucket to control quality of service, control the quality of service of the target layer by using the token bucket; or
in response to a message of not enabling a token bucket to control quality of service of the target layer, control the quality of service of the target layer in a default manner.

13. The apparatus of claim 9 or 10, wherein for the target layer, the quality of service comprises at least one of following service items: the number of operations per second, and bandwidth;
wherein each service item uses a separate token bucket to control quality of service;
wherein, in a case of the service item comprises the number of operations per second, the target token bucket comprises at least one first sub-token bucket, and at least one of following first sub-control items in the number of operations per second is controlled separately using a corresponding first sub-token bucket:
a total upper limit of write operations and read operations per second;
a write upper limit of write operations per second; or
a read upper limit of read operations per second;
wherein, in a case of the service item comprises the bandwidth, the target token bucket comprises at least one second sub-token bucket, and at least one of following second sub-control items in the bandwidth is controlled separately using a corresponding second sub-token bucket:
an upper limit of total bandwidth for write operations and read operations per second;
an upper limit of bandwidth for write operations per second; or
an upper limit of bandwidth for read operations per second.

14. A non-transitory computer-readable storage medium storing a computer instruction thereon, wherein the computer instruction is used to cause a computer to execute the method of any one of claims 1 to 8.

15. A computer program product comprising a computer program, wherein the computer program implements the method of any one of claims 1 to 8, when executed by a processor.
